Europäisches Patentamt

European Patent Office

Office européen des brevets

(11) Publication number: **0 174 714**
**A1**

# (12) EUROPEAN PATENT APPLICATION

(21) Application number: **85304168.9**

(22) Date of filing: **12.06.85**

(51) Int. Cl.⁴: **G 11 B 5/245**

(30) Priority: **29.06.84 US 645436**

(43) Date of publication of application:
**19.03.86 Bulletin 86/12**

(84) Designated Contracting States:
**AT BE CH DE FR GB IT LI NL SE**

(71) Applicant: **Irwin Magnetic Systems, Inc.**
**2311 Green Road**
**Ann Arbor Michigan 48105(US)**

(72) Inventor: **Bolt, Michael Loren**
**3751 Miller Road**
**Ann Arbor Michigan 48103(US)**

(74) Representative: **Robinson, Anthony John Metcalf et al,**
**Kilburn & Strode 30 John Street**
**London, WC1N 2DD(GB)**

(54) Magnetic transducer head structure and method of use.

(57) A magnetic core structure (18) for transducer heads (10), generally of the type used in magnetic recording, for data for storage purposes, which, although of single-gap form provides operational characteristics similar to those typically found in multi-gap heads. It is thus suitable for use in a bi-directional media transport although having only a single read/write gap. The core structure (18) includes a full-width pole piece (20) on one side of the gap, and a partial-width pole piece (28) on the opposite side of the gap; additionally, the core structure includes separate magnetic return shunt pieces (26, 30) which are disposed on opposite sides of the partial-width pole piece (28) and extend into communication with the opposite pole piece (20). During writing, the full-width core structure is energized, producing a magnetic circuit which includes both the partial width pole and the shunt pieces. During reading, signals are taken only from flux present in the partial-width pole. Thus, the "write" width is wider than the "read" width.

Fig. 4.

EP 0 174 714 A1

1.

## MAGNETIC TRANSDUCER HEAD STRUCTURE
## AND METHOD OF USE.

This invention relates generally to the field of magnetic recording, and in particular to recording and reproducing ("read/write") transducer structures used in that field. More particularly, it relates for example to magnetic transducer head particularly useful in digital data storage devices, especially (but not exclusively) useful for applications in tape recorder devices (tape drives) used for digital data storage and retrieval. It also relates to a method of use of such a head structure.

Most data storage and retrieval is done by use of magnetic recording apparatus, mainly disc drives and tape drives, the term "drive" having come to be accepted as the basic industry designator for recorder/reproducer devices. In the case of disc drives, there are both "hard" disc and "floppy" disc-type media, the "hard" disc being a rigid platter having a magnetizable surface upon which magnetic flux transitions are recorded by means of a transducer head which aerodynamically "flies" over the surface of the disc on a thin film of air. "Floppy" disc drives utilize a magnetically recordable media which, although disc-like in shape, is much more in the nature of magnetic tape, being highly flexible and typically comprising a sheet of polymeric material carrying a surface coating of magnetizable metal oxide. In both tape and floppy disc drives, recording is accomplished by maintaining contact between the moving flexible media and the recording head, at the "gap" in the core structure where the magnetic flux accesses the magnetizable media.

While tape drives typically or at least frequently feature bi-directional recording and reproducing capabilities, (so that the tape may be transported along its length from one end to the other during a first read or write operation and then transported back in the opposite direction for a second such operation, without the necessity of complete tape rewind between the two such operations as would be required in unidirectional recording), this type of operation is not characteristic in disc drives (whether "floppy" or "hard" disc media is involved), in which the disc-form media is continuously rotated in the same direction and all recording or reproduction on the media is done unidirectionally.

This rather fundamental difference in operational modes creates a corresponding fundamental difference in the nature of the transducers or head which may be utilized. In the case of bi-directional reading and writing, a multigap head is used, but in the case of unidirectional recording only a single-gap head is necessary, which is much less expensive than a multi-gap head but has the disadvantage of only being able to read and write at different times; i.e., it cannot write and simultaneously read data, as is frequently desirable and is often provided for in tape drives.

A further consideration is the actual structure of the heads utilized in the two different types of operation. In order to maximize the likelihood that the read gap will be properly positioned directly over the written track on the media, two essentially opposite approaches have come to be recognised in the art with respect to the multi-gap heads used in tape drives. The first of these involves use of a write gap which is substantially wider than the read gap, such that if the read gap is nominally positioned anywhere near the centre of a written track, the head is likely to be in full registration with the track, i.e., recorded transitions extending across the entire height of the gap. The second such approach involves use of a head having a separate erase gap disposed ahead of the write gap, so that the media is erased cleanly before each writing operation takes place; thus, the writing is always accomplished on media having no residual signals. In this arrangement, a read gap is used which is considerably wider than the written track, so that the entire width of the written track is always likely to be completely straddled by the read gap. Since the separate erase gap eliminates all residual or extraneous signals recorded contiguous to the narrower written track, interference, cross-talk and the like will not be present in the read data stream.

Since the approaches just described can only be accomplished with multi-gap head, they are not utilized in floppy disc drives, where only single-gap read-write head are used. In order to provide a system somewhat analogous to the second arrangement described above, floppy disc drives frequently utilize a "tunnel erase" concept, in which separate erase gaps are provided on each side and to the rear of the signle read/write gap. The function of the two such erase gaps is to "trim" the marginal edges of the written data track by erasing along both sides thereof, thus producing a resultant narrowed track of written data, the sides of which have no residual or extraneous recorded transitions. In this arrangement, the head structure is somewhat complex since it is necessary to space the erase gaps rearwardly of the read/write gap in order to eliminate or minimize both mechanical and magnetic interference problems, and of course there is the added requirement and expense of providing, and assembling, two separated erase gaps.

The tunnel-erase concept just described is not advantageous in bi-directional recording operationa, since bi-directional use of that type of head would inherently necessitate the addition of another pair of erase gaps, spaced on the opposite side of the single read/write gap from the location of the first such set of erase gaps, in order to accommodate both of the possible mutually-opposite recording directions. The realities of manufacturing such a head do not favour its potential use, since the required accurate alignment of the various erase gaps with respect to themselves and with respect to the single read/write gap results in a difficult manufacturing process which inevitably adds substantial expense. Of course, there is also additional expense involved in the requirement of the second pair of erase gaps, in and of themselves.

It is one aim of the present invention to provide a new and advantageous solution (at least partially) for the difficulties and problems discussed above. In particular, the invention provides a new and advantageous form of transducer head, and a core structure for such a head, which is particularly useful in connection with data storage tape drives (although not limited to that use), which in effect provides operational characteristics functionally representative of those typically found in a multi-gap heads, while nonetheless having in fact only a single read/write gap.

More particularly, the invention provides a new form of transducer head, and core structure, for data storage apparatus which provides for operational characteristics suitable to bi-directional media transport and read/write operations while nonetheless featuring only a single read/write gap structure.

More particularly still, the invention provides for a novel and desirable transducer head construction providing for wide-write, narrow-read capabilities by use of a single-gap core structure.

The foregoing objectives and advantages of the invention are provided by, in effect, a transducer head having a core structure with a full-width write core pole piece on one side of the gap and a partial width read core pole piece on the opposite side of the gap, with additional magnetic closure or return shunt pieces on opposite sides of the narrow read core at the gap which are in effective operation only during write procedures.

According to a first aspect of the present invention a magnetic core structure for a transducer head is characterised by a magnetic circuit formed from magnetic material defining at least two separate paths for magnetic flux and having a gap where magnetic flux in the circuit may access a magnetic data-storage media, the circuit including a first magnetic pole structure at one side of the gap, and a second magnetic pole structure at the other side of the gap; the first pole structure comprising at least a main former (defining, with the second pole structure, a first magnetic flux path) and a subsidiary former (defining, with the second pole structure, a second magnetic flux path), the formers being magnetically isolated from eachother in the region of the gap, and the main former having a thickness at the gap which is less than that of the second pole structure at the gap, the subsidiary former extending from the gap into magnetic communication with the second pole structure at a point spaced from the gap to provide a parallel magnetic return; and the main former having an intermediate portion (shunted by and separated from the subsidiary former) defining an electromagnetic coil-accessing location along the first magnetic path.

Preferably only a single gap is provided. Preferably, also, the subsidiary former extends into magnetic communication with the main former at a point spaced from the gap. Further, the device is particularly adapted for use in digital data storage devices.

According to a second aspect of the invention, a method of reading and writing magnetic flux transitions on magnetically-recordable media is characterised by transporting the recording media past a single-gap transducer head in a recording pass; recording flux transitions on the media during the recording pass by using a first portion of a magnetic core structure (which structure defines the two opposite sides of the gap), the first portion defining a predetermined first part of the overall length of the gap; transporting the recording media past the transducer head in a reproducing pass; and, during the reproducing pass, reproducing the flux transitions previously recorded on the media by using a second portion of magnetic core structure, the second portion of the core structure defining a predetermined second part of the overall length of the gap; the first and second parts being different lengths of the transducing gap.

The invention may also be characterised by a magnetic circuit formed from magnetic material defining a path for magnetic flux, said circuit having at least one gap where magnetic flux in such circuit may access magnetically-recordable data-storage media; means defining a first magnetic pole structure for said circuit at one side of said gap, and means defining a second magnetic pole structure for said circuit at the other side of said gap generally opposite said first pole structure; at least one of said magnetic pole structures having a laminar form comprising at least one medial strata and at least one flanking strata disposed adjacent to and overlying at least portions of said medial strata; said medial strata having a thickness at said gap which is less than that of the other pole structure disposed across said gap; non-magnetic isolation means disposed between said different strata at said one pole structure for isolating at least certain of said strata from the other thereof at said gap; said flanking strata shunting portions of said medial strata along said magnetic circuit and extending alongside and into magnetic communication with said medial strata at a point spaced from said one pole structure to provide a parallel magnetic return; said medial strata having an intermediate portion shunted by and separated from said flanking strata, said intermediate portion defining an electromagnetic coil-accessing location along said magnetic path; said medial strata extending back into magnetic communication with said magnetic circuit at a point beyond said intermediate portion.

Preferably the flanking strata extends into magnetic communication with the medial strata at a point spaced from the gap. A pair of flanking strata may be provided, each disposed on opposite sides of the medial strata. The flanking strata may have an effective magnetic path length which is shorter than that of the medial strata.

The invention may be carried into practice in various ways, and one specific magnetic core structure, and method of its use, will now be described by way of example, with reference to the accompanying drawings, in which:

Figure 1 is a pictorialized overhead plan view of a head structure in accordance with the invention;

Figure 2 is a front elevation of the structure shown in Figure 1;

Figure 3 is a side elevation thereof;

Figure 4 is an enlarged scrap-sectional view, taken along the line IV-IV of Figure 5, showing the coil structure of the head; and

Figure 5 is a fragmentary front elevational view of the structure shown in Figure 4.

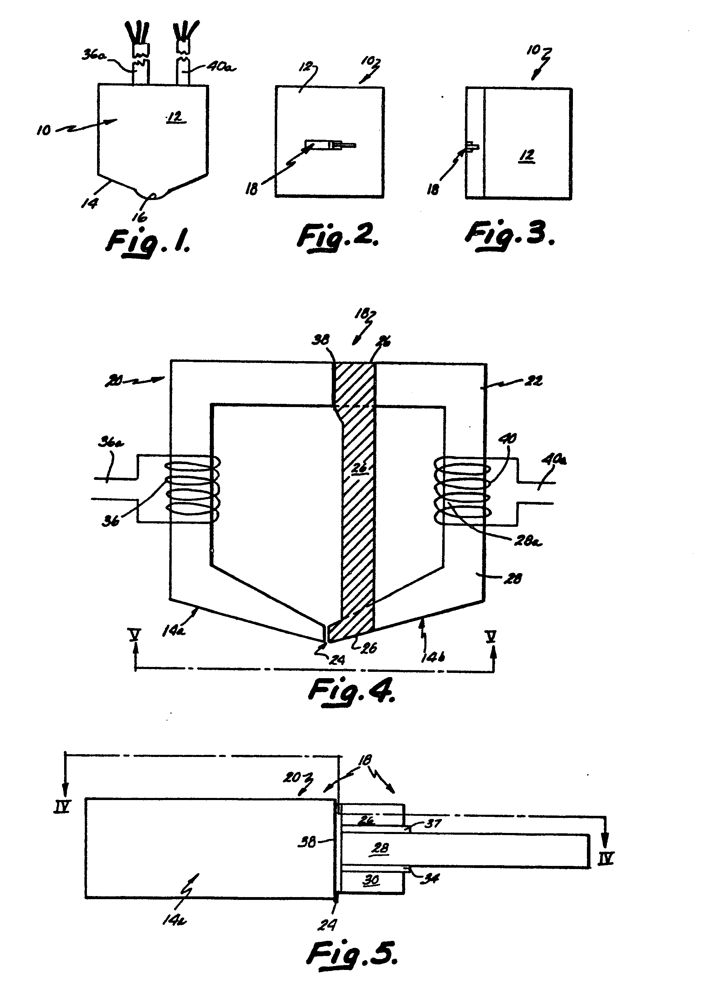

Referring now in more detail to the drawings, Figures 1, 2 and 3 show the overall or general nature of a transducer head in accordance herewith. As illustrated in these Figures, the overall shape of the head 10 comprises a generally square body 12 having a bevelled or angulated front face 14 formed by complementary cutback angles of about 20°, between which is a rounded tape-engagement contour 16 whose radius of curvature is preferably about 1.5mm. As will be understood, these particular dimensions have reference to magnetic tape media, and to tape transport particularities; in particular, the outback angle and radiused contour noted above illustrate a particular embodiment having reference to the provision of maintaining appropriate head-to-media contact at the transducing gap for tape speed of about 40 inches per second (101.6cm per second).

The transducer head 10 in accordance with the invention has a particular core structure 18 whose front portions, present at the transducing gap, are observable in Figures 2 and 3, and whose overall nature is illustrated in more detail in Figures 4 and 5. More particularly, the core structure 18 includes differently-structured parts (essentially halves) 20 and 22. Considering the half or portion 20 of the core structure as being the "write" portion, it will be seen in Figure 5 that this half of the core, shown at the left of the transducing gap 24, constitutes a single pole member whose height is the full height of the gap.

The portion 22 of the core structure, appearing at the right side of the transducing gap 24, is not a single pole structure, but is instead duplex in form, including (in this particular embodiment) three different members disposed in strata or lamina form, designated 26, 28 and 30. Of these, the outer or peripheral members (herein sometimes referred to as "flanking strata" (or "subsidiary formers") 26 and 30 comprise write core closures or returns, whereas the central or medial strata (or "main former") 28 comprises a read core strata. Each of these three elements, or strata, are separated, and magnetically isolated, by non-magnetic isolation layers 37 and 34 (e.g., brass), which preferably extend at least slightly beyond the boundaries of the write closures 26 and 30, as illustrated in Figure 5, the read core 28 extending substantially beyond the isolation layers.

With reference to Figure 4, it will be seen that the core structure 18 may be of generally C-shaped configuration in an overall sense, defining the recording gap 24 at the opening between two converging face portions 14a and 14b which basically define the aforementioned cutback angle. Bearing in mind the relative height relationships of the different strata shown in Figure 5, it will be seen from Figure 4 that the main write core 20 extends rearwardly from the face portion 14b, has a write coil 36 wound about an intermediate portion of it, and extends back toward and contacts or otherwise magnetically communicates with the other core portion 22, at a boundary or junction 38. At this point, the three strata-form elements 26, 28 and 30 have essentially the same height relationship as they do at the transducing gap 24, and thus correspond substantially fully to the height of the core portion 20. The upper and lower strata 26 and 30 extend rearwardly from the transducing gap 24 in a much more direct manner than is true of the inner or medial strata 28, which has essentially a mirror-image configuration with that of the core portion 20 described above (Figure 4). Also, the medial strata 28 has wound about an intermediate portion an electromagnetic coil 40, which in accordance with the embodiment under discussion constitutes a read coil. As will be understood, the electric leads 36a and 40a shown in Figure 1 as emanating from the rear of the head 10 in fact constitute the ends of the windings 36 and 40, respectively.

With regard to particular structural materials, the core 18 may in general be of any conventional magnetic material customarily used in transducer cores, i.e., mu metal, ferrite, etc. The various strata elements constituting the core portions may each comprise a "stack" of thin sheet-like sections, as is often done to reduce eddy current effects, but this is not essential in transducer cores generally, particuarly where (as here) the intended application is to write and read relatively narrow and closely-spaced tracks. Where the intended media is of tape form, the overall height of the head (as shown in Figure 2 and 3) is preferably many times greater than the mere height of the core structure itself, and generally equals or exceeds the width of the tape since the latter must slide lengthwise across the convexly curved front face of the head during transducing operations and the tape should be supported by the head across its entire width. The opposite is generally true in floppy disc transducing procedures, wherein the pole pieces defining the gap typically form a rounded, bluntly conical projection which deforms the recording media into a complementary dimple as the media moves over the gap. As already indicated above, the core structure of the present invention may be embodied in a head of that nature also, using appropriate shaping measures but incorporating the basic structural attributes and concepts set forth herein.

Inasmuch as the preferred embodiment in accordance herewith refers to a transducer head for use with tape media, the overall height of the head 10 shown in Figures 2 and 3 is much higher than the mere height of the core structure 18 itself, the general physical structure of the head (apart from the core) being structured according to known head-building techniques, in accordance with which a mounting block of non-magnetic material (e.g., brass) of the desired overall physical size for the head is used to mount the core structure. Usually, such a mounting block takes the form of two complementary halves, which are joined together by a mechanical fastening means about the core structure, with interstitial spaces being filled by an appropriate non-magentic potting compound, such as epoxy, which may also be used as an exterior coating or shaping agent.

A transducer head structured in accordance with the foregoing provides the anomalous result of non-symmetric write/read width characteristics in a single-gap core and head. In the particular format generally referred to above, the core portion (pole structure) 20 is configured, by the size and shape of the magnetic gap and the characteristics of the write coil winding 36, to write a track of magnetic transitions which are essentially as wide as the full width of the gap 24, i.e., the width of core portion 20 itself. On the other hand, the much narrower medial strata 28 is configured, by its own size and shape, and the characteristics of the read coil 40 wound upon its accessible intermediate arm 28a extending laterally beyond the outer strata 26 and 30, to read a track width much narrower than the write core. Consequently, the overall head structure 18 in the arrangement noted constitutes a head of single-gap configuration which writes a wide track but reads a narrow one.

Somewhat more particularly, it will be seen from the above that energization of the write coil 36 with electrical signals desired to be recorded will create corresponding magnetic flux patterns within the core structure 18, travelling around the paths so defined and across the transducing gap 24, at which position the width of the flux in the gap is actually a function of the heat of the core half or pole 20 and the overall height or width of all of the various strata constituting the core half 22, i.e., essentially the same width as the pole piece 20. As a result, a recorded track of the same width is written on the media moving across the gap. In this operation, the magnetic flux which moves across the gap from pole 20 to pole 22 is actually returned across the rear portion of the core (i.e., across the boundary 38) by all three of the strata 26, 28 and 30. In a read mode, however, the magnetic circuit performance is different due to the relative configuration of the medial read core (pole piece) 28 and the position of the read coil 40, which is wound upon only the medial core

0174714

17.

element, exclusive of the outer or flanking strata 26 and 30. Thus, with the read core or pole structure aligned in full registration with the written track on the media, the read core pole piece 28 will be aligned over only the center portion of the written track on the media, and it thus will access considerably less than the full width of the magnetic transitions on the media. Accordingly, the magentic flux flowing from the read core strata 28 to the rear boundary or junction 38 will be substantially less than the total available magnetic flux within the core itself, the peripheral or flanking strata 26 and 30 in effect shunting away from the read core a selected portion of the total magnetic flux flowing in the magnetic circuit provided by the overall core structure. Accordingly, a wide-write, narrow-read capability is provided, even though the head has but a single gap.

It should be pointed out that the basic structure of the core described above would also facilitate implementation of a narrow-write, wide-read capability if so desired, depending upon the particularities of the windings 36 and 40 utilized at the two different points in the core. That is, the general characteristics of write coils and read coils for transducers of the general type

18.

involved are of course known in the art, and either such type may be selected for use at either such location, according to the nature of the head desired.

A particular environment or application in which the above-described invention may advantageously be utilized comprises a tape drive intended for selective use in place of or in addition to a floppy disc dirve, and utilizing the same type of interface. That is, a pre-existing floppy disc storage device could only be expected to have read/write capabilities for a single direction of media movement, and this limitation or characteristic would thus be inherent in utilization of the same type of interface. On the other hand, tape storage media desirably incorporates bi-directional operation, in which end-to-end, back-and-forth recording formats are utilized to minimize time requirements. In such an environment, a transducer head in accordance with the present invention provides highly desirable advantages and capabilities since the single-gap head cooperates directly with the disc drive-type interface, while the wide-write, narrow-read capability provides for desirable read/write functioning in bi-directional operation.

0174714

19.

CLAIMS

1. A magnetic core structure (18) for a transducer head (10) characterised by a magnetic circuit formed from magnetic material defining at least two separate paths for magnetic flux and having a gap (24) where magentic flux in the circuit may access a magnetic data-storage media, the circuit including a first magnetic pole structure (22) at one side of the gap, and a second magnetic pole structure (20) at the other side of the gap; the first pole structure comprising at least a main former (28) (defining, with the second pole structure, a first magnetic flux path) and a subsidiary former (26, 30) (defining, with the second pole structure, a second magnetic flux path), the formers being magnetically isolated from eachother in the region of the gap, and the main former having a thickness at the gap which is less than that of the second pole structure at the gap, the subsidiary former extending from the gap into magnetic communication with the second pole structure at a point spaced from the gap to provide a parallel magnetic return; and the main former having an intermediate portion (shunted by and separated from the subsidiary former) defining an electromagnetic coil-accessing location along the first magnetic path.

2. A magnetic core structure as claimed in Claim 1, in which the first pole structure includes a second subsidiary former (30), the two subsidiary formers (26, 30) being disposed on either side of the main former at the gap.

3. A magnetic core structure as claimed in Claim 1 or Claim 2 in which each of the pole structures (20, 22) at the gap (24) have generally the same overall width (measured in a direction along the gap).

4. A magnetic core structure as claimed in any one of Claims 1 to 3 in which the first magnetic path length is longer than the other, or any of the other, magnetic path lengths.

5. A magnetic core structure as claimed in any one of Claims 1 to 4 in which the subsidiary former (26, 30), or at least one of them, extends laterally of and out of superposition with respect to the main former (23) (in a direction parallel to the gap) at least in the area of the intermediate portion.

6. A magnetic core structure as claimed in any one of the preceding claims in which the main former (28) and the subsidiary former or formers (26, 30) extend into magnetic communication with the second pole structure (20) at a common junction area.

7.    A magnetic core structure as claimed
in Claim 6 in which the common junction area
is located generally opposite the gap (24).


8.    A magnetic core structure as claimed
in any one of the preceding claims in which
the main former (28) is provided with an
electromagnetic write or read coil (40) at
the coil accessing location and the second
pole structure is provided with a read or write
coil (36).


9.    A method of reading and writing magnetic
flux transitions on magnetically-recordable
media characterised by transporting the recording
media past a single-gap transducer head (10)
in a recording pass; recording flux transitions
on the media during the recording pass by using
a first portion (20; 28) of a magnetic core
structure (which structure defines the two
opposite sides of the gap (24)), the first
portion defining a predetermined first part of
the overall length of the gap; transporting
the recording media past the transducer head
in a reproducing pass; and, during the
reproducing pass, reproducing the flux
transitions previously recorded on the media
by using a second portion (20; 26, 30) of the
magnetic core structure, the second portion
of the core structure defining a predetermined second part of the overall length of the gap;
the first and second parts being different
lengths of the transducing gap.

10. A method of reading and writing
magnetic flux transitions as claimed in Claim
9, in which the first and second parts of the
transducing gap (24) are made available by
using a magnetic core structure comprising
several formers (26, 28, 30) to define the
two opposite sides of the gap and selecting
a different former or formers (28) for use
as a read gap from the former or formers
(26, 30) selected for use as a write gap.

1/1        0174714

Fig.1.    Fig.2.    Fig.3.

Fig.4.

Fig.5.

0174714

European Patent Office

**EUROPEAN SEARCH REPORT**

Application number

EP 85 30 4168

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 8, no. 10 (P-248)[1447], 18th January 1984; & JP - A - 58 171710 (NIPPON DENSHIN DENWA KOSHA) 08-10-1983 | 1-3 | G 11 B    5/245 |
| A | IDEM | 5-10 | |
| X | US-A-4 085 429  (T. HASEGAWA) * column  1, line 49 - column 2, line 56; figures 4-7 * | 1-5 | |
| A | | 8-10 | |
| A | PATENT ABSTRACTS OF JAPAN, vol. 4, no. 31 (P-2)[513]; & JP - A - 55 4723 (MATSUSHITA) 14-01-1980 | | **TECHNICAL FIELDS SEARCHED (Int. Cl.4)** |
| A | EP-A-0 035 943  (L.C.C. - C.I.C.E.) * abstract, figure 2 * | | G 11 B    5/00 |

The present search report has been drawn up for all claims

| Place of search BERLIN | Date of completion of the search 22-11-1985 | Examiner ROGNONI M.G.L. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82